# DEMANDE DE BREVET EUROPEEN

(11) **EP 4 764 389 A1**
(43) Date de publication de la demande: **24.06.2026**
(21) Numéro de dépôt: 25216946.1
(22) Date de dépôt: 19.11.2025
(51) Int. Cl.: F41G 3/02, F41G 3/08, F41G 3/16, F41A 23/00, F41G 3/14, F41G 3/22, F41G 5/06, F41G 5/18

(54) **PROCEDE ET SYSTEME DE COMMANDE DES MOUVEMENTS D'UN ORGANE DE VISEE ET AERONEF ASSOCIE**

(30) Priorité: 20.12.2024 FR 2414120
(71) Demandeur: Airbus Helicopters, 13725 Marignane Cedex (FR)
(72) Inventeur: FERRIGNO, Frédéric, 13725 MARIGNANE Cedex (FR)
(74) Mandataire: GPI Brevets

(57) **Abrégé**

La présente invention concerne un procédé et un système de visé (26) d'un aéronef (1) comportant un organe de visée (2) et un dispositif de commande (27) commandant un déplacement de l'organe de visée (2), l'organe de visée (2) comportant au moins deux degrés de liberté en rotation par rapport à un châssis (3, 3') solidaire dudit aéronef (1) étant mobile en rotation par rapport à un châssis (3) solidaire dudit aéronef (1), un premier degré de liberté en rotation selon un axe de rotation en site (A1) et un second degré de liberté selon un axe de rotation en gisement (A2). système de visée (26) comporte au moins une interface de sélection (7) permettant de sélectionner un mode de commande des mouvements dudit organe de visée (2) parmi trois modes comprenant un premier mode dans lequel ledit organe de visée (2) est laissé libre en rotation, un deuxième mode dans lequel ledit organe de visée (2) est maintenu fixe par rapport audit châssis (3) et un troisième mode dans lequel ledit organe de visée (2) est piloté à distance par un pilote de l'aéronef (1).

## Description

La présente invention se rapporte au domaine des aéronefs équipés d'organes de visée. Un tel aéronef peut être par exemple un giravion muni d'au moins un rotor de sustentation, tel qu'un hélicoptère éventuellement.

L'invention vise plus particulièrement un procédé et un système de commande des mouvements d'un tel organe de visée et un aéronef ainsi équipé de ce système de commande.

En outre, de tels organes de visée peuvent notamment avoir une application pour permettre de viser une cible et peuvent comporter un objet de forme allongée pouvant se présenter sous la forme d'un canon d'une arme, telle une mitraillette, mais également d'un projecteur pour éclairer une cible, d'une caméra pour filmer et/ou prendre en photo une cible, d'un laser pour effectuer une mesure de distance ou encore d'une lance à eau pour arroser une zone par exemple pour lutter contre un incendie.

De façon générale, un tel organe de visée est alors mobile en rotation par rapport à un châssis solidaire de l'aéronef selon deux axes de rotation perpendiculaires. Ainsi, l'organe de visée peut se déplacer en rotation par rapport au châssis et peut décrire un premier mouvement de rotation par rapport à un premier axe de rotation en site et un second mouvement de rotation par rapport à un second axe de rotation en gisement.

Par exemple, lorsqu'un aéronef repose au sol sur un plan horizontal, le premier axe de rotation en site permet d'effectuer un balayage vertical avec l'organe de visée, c'est-à-dire de haut en bas et inversement, et le second axe de rotation en gisement permet d'effectuer un balayage horizontal avec l'organe de visée, c'est-à-dire de gauche à droite et inversement.

L'organe de visée peut en outre être positionné latéralement à l'arrière d'un cockpit de l'aéronef et être manœuvré exclusivement par un opérateur situé en dehors d'un cockpit de l'aéronef. L'organe de visée peut en outre être agencé au niveau d'une ouverture et émerger en tout ou partie du fuselage de l'aéronef.

L'opérateur manœuvrant l'organe de visée est alors une personne physique supplémentaire dédiée à cette tâche qui est embarquée dans une cellule de l'aéronef agencée à l'arrière du cockpit et n'est donc pas le pilote ou le copilote de cet aéronef.

Cependant, en cas d'incapacité de l'opérateur à effectuer cette manœuvre de l'organe de visée ou d'absence de l'opérateur, un pilote ou un copilote de l'aéronef n'est pas en mesure d'actionner un tel organe de visée.

Alternativement et tel que décrit par le document US20140319217A1, il est connu d'utiliser un système de visée pour armes portatives comprenant des paires de capteurs inertiels de type gyroscopique, accélérométrique et magnétométrique disposés respectivement sur une arme et sur un casque porté par exemple par un pilote d'un véhicule, tel un aéronef.

Une telle paire de capteurs permet alors de déterminer à la fois les orientations relatives et les positions relatives dans l'espace de l'arme et du casque.

Cependant, dans ce cas, l'arme portative est exclusivement contrôlée par un pilote de l'aéronef.

Le document US11821996B1 divulgue quant à lui un suivi des positions et des orientations d'entités et d'objets portés par les entités dans un environnement, et plus particulièrement, le suivi des positions et des orientations relatives d'une arme par rapport à une entité dans divers environnements. L'entité peut correspondre à un véhicule terrestre, un drone, un aéronef ou encore à un humain. Lorsque l'entité est un humain, un réseau d'unités de mesure inertielle peut être monté sur un casque porté par cet humain pour détecter une orientation du casque. Cependant l'arme est alors exclusivement contrôlée à distance par une seule personne équipée de son casque.

Le document US12117258 concerne des plateformes d'armes et notamment des supports qui sont utilisés sur des giravions par un équipage. En outre, une telle plateforme comporte un berceau mobile permettant à l'arme de comporter au moins deux degrés de liberté en rotation par rapport à une structure.

Par ailleurs, un contrôleur est configuré pour faire fonctionner une arme montée dans le berceau dans un premier mode de fonctionnement dans lequel un opérateur distant peut diriger et tirer un projectile avec l'arme de manière déportée à l'aide d'une station de commande à distance. Le contrôleur permet également de mettre en œuvre un deuxième mode de fonctionnement dans lequel les mouvements du berceau sont amortis avec un système de stabilisation et dans lequel un opérateur local peut viser et tirer un projectile avec l'arme.

Un troisième mode de fonctionnement peut également être mis en œuvre dans lequel les mouvements du berceau ne sont pas amortis et dans lequel l'opérateur local dirige manuellement l'arme et peut tirer un projectile.

Un quatrième mode de fonctionnement dit « de sécurité » peut aussi être mis en œuvre dans lequel les mouvements du berceau sont bloqués, l'arme étant maintenue fixe par rapport à la structure.

Le document US8850950 divulgue quant à lui des modes d'actionnement d'une mitrailleuse d'hélicoptère, soit manuellement par un opérateur, soit uniquement pour tirer des projectiles par un pilote de l'hélicoptère.

Dans le mode manuel, l'arme est libre en rotation par rapport à deux axes.

Dans le mode de tirs à distance effectués par le pilote, les mouvements de rotation de la mitrailleuse sont alors bloqués. La mitrailleuse est dans ce cas fixe et orientée dans une position prédéterminée vers l'avant.

Le document US2022128823 divulgue un système de visualisation de casque comportant un dispositif de visualisation muni d'un dispositif de détection de posture.

Ce dispositif de détection de posture peut comporter une caméra.

Une pluralité de cibles solidaires des parois d'un cockpit de l'aéronef peuvent être utilisées pour identifier la position est l'orientation du casque.

Le dispositif de détection de posture peut permettre d'asservir des systèmes embarqués sur l'aéronef, tels que certains systèmes d'arme.

La présente invention a alors pour objet de proposer un procédé et un système de commande permettant de s'affranchir des limitations mentionnées ci-dessus. Un tel procédé vise notamment à permettre un contrôle plus sûr en toutes circonstances des mouvements d'un organe de visée par rapport à un châssis solidaire d'un aéronef.

Ainsi, le procédé et le système de commande permettent de s'adapter aux différents événements d'une mission d'un aéronef et notamment au cas où l'opérateur aux commandes de l'organe de visée serait absent de l'aéronef ou dans l'incapacité de commander les mouvements de l'organe de visée.

A des fins de simplification, le terme « pilote » utilisé par la suite pourra indifféremment désigner un pilote ou un copilote de l'aéronef installé dans un cockpit de l'aéronef par opposition à un opérateur installé en dehors et à l'arrière de ce cockpit.

L'invention concerne donc un procédé de commande des mouvements d'un organe de visée d'un aéronef, l'organe de visée comportant au moins deux degrés de liberté en rotation par rapport à un châssis solidaire de l'aéronef, lesdits au moins deux degrés de liberté comportant un premier degré de liberté en rotation selon un axe de rotation en site et un second degré de liberté en rotation selon un axe de rotation en gisement.

Ce procédé est remarquable en ce qu'il comporte au moins une sélection d'un mode de commande des premier et second degrés de liberté de l'organe de visée parmi au moins trois modes comprenant :
- un premier mode dans lequel l'organe de visée est laissé libre en rotation autour des axes de rotation en site et en gisement pour être manœuvrable par un opérateur,
- un deuxième mode dans lequel l'organe de visée est maintenu fixe par rapport au châssis, l'aéronef comportant au moins un organe de blocage configuré pour maintenir dans une position prédéterminée l'organe de visée par rapport au châssis,
- un troisième mode dans lequel l'organe de visée est piloté à distance par un pilote de l'aéronef distinct de l'opérateur au moyen d'au moins un organe de commande à distance actionné par le pilote de l'aéronef, ledit au moins un organe de commande à distance comportant un système de suivi d'au moins un œil du pilote, et d'au moins un actionneur configuré pour modifier une position de l'organe de visée par rapport au châssis, ledit au moins un organe de commande à distance générant au moins une consigne de commande, ladite au moins une consigne de commande étant transmise à un contrôleur, le contrôleur générant un ordre de commande transmis audit au moins un actionneur.

En d'autres termes, un tel procédé de commande permet de sélectionner alternativement l'un des trois modes de commande.

Par exemple, une première sélection d'un des trois modes peut être opérée au début d'une mission, puis en cours de mission une seconde sélection d'un autre mode peut être mise en œuvre si nécessaire ou en cas d'urgence liée à une incapacité soudaine de l'opérateur pour manœuvrer l'organe de visée. Ainsi, une telle seconde sélection peut être mise en œuvre notamment lors d'une phase de vol par exemple pour permettre à un pilote ou copilote de l'aéronef de prendre la main sur les commandes des mouvements de l'organe de visée.

Par ailleurs, le ou les actionneurs sont distincts du ou des organes de blocage.

Les actionneurs peuvent avantageusement comporter deux moteurs électriques à courant continu permettant de convertir une énergie électrique en une énergie mécanique. Les axes de rotation de ces moteurs électriques peuvent être respectivement confondus avec l'axe de rotation en site et l'axe de rotation en gisement.

Des organes de transmission, tels que des engrenages, des pignons, couronnes ou poulies, peuvent également permettre de transmettre le mouvement de rotation entre les moteurs et les axes de rotation en site et en gisement de l'organe de visée.

Les organes de blocage peuvent notamment comporter un ou plusieurs doigts d'indexage comportant chacun une forme cylindrique de révolution selon un axe de révolution. Les organes de blocage comportent alors également un moyen motorisé, par exemple un moteur électrique, par doigt d'indexage. Chaque moyen motorisé permet de commander un déplacement en translation d'un doigt d'indexage le long de son axe de révolution entre deux positions par rapport à un support.

Dans une position de blocage d'un premier doigt d'indexage, celui-ci coopère avec un premier alésage de forme complémentaire pour bloquer le degré de liberté en rotation de l'organe de visée selon l'axe de rotation en site.

Dans une position de libération du premier doigt d'indexage, celui-ci est agencé en dehors du premier alésage de forme complémentaire pour laisser libre le degré de liberté en rotation de l'organe de visée selon l'axe de rotation en site.

De même, dans une position de blocage d'un second doigt d'indexage, celui-ci coopère avec un second alésage de forme complémentaire pour bloquer le degré de liberté en rotation de l'organe de visée selon l'axe de rotation en gisement.

Dans une position de libération du second doigt d'indexage, celui-ci est agencé en dehors du second alésage de forme complémentaire pour laisser libre le degré de liberté en rotation de l'organe de visée selon l'axe de rotation en gisement.

Dans le deuxième mode, les moyens motorisés peuvent être activés et chaque doigt d'indexage est agencé dans sa première position de manière à bloquer les deux degrés de liberté en rotation de l'organe de visée.

Par exemple, la position prédéterminée de l'organe de visée dans ce deuxième mode peut correspondre à un angle de site prédéterminé selon l'axe de rotation en site et à un angle de gisement prédéterminé selon l'axe de rotation en gisement. De cette manière, la position prédéterminée de l'organe de visée peut permettre d'orienter une ligne de visée en direction d'une cible par exemple selon une direction orientée vers l'avant, parallèle à un axe longitudinal de l'aéronef s'étendant depuis un nez vers une queue de l'aéronef.

Enfin, dans le troisième mode, le ou les organes de blocage peuvent être activés pour que chaque doigt d'indexage soit agencé dans sa deuxième position de manière à libérer les deux degrés de liberté en rotation de l'organe de visée.

Avantageusement, ladite au moins une sélection étant opérée par le pilote de l'aéronef à l'aide d'une interface de sélection, le procédé peut comporter une transmission d'un signal de sélection, porteur du mode de commande sélectionné, de l'interface de sélection vers le contrôleur.

Autrement dit, la transmission du signal de sélection peut être réalisée par voie filaire ou non filaire entre l'interface de sélection et le contrôleur. Un tel contrôleur peut comporter notamment une unité de traitement indépendante du ou des organes de blocage et du ou des actionneurs. Alternativement, le contrôleur peut comporter plusieurs unités de traitement intégrées respectivement à l'organe de blocage ou aux organes de blocage ainsi qu'à l'actionneur ou aux actionneurs.

L'interface de sélection peut notamment être formée par un interrupteur à bascule à trois positions, chaque position correspondant à l'un des trois modes. Une telle interface de sélection peut également être formée par un écran présentant une dalle tactile, cette interface de sélection présentant des boutons virtuels affichés sur l'écran.

Selon un autre aspect, lorsque le troisième mode est sélectionné, le procédé peut comporter un asservissement de la position de l'organe de visée en fonction d'une position du casque, ledit au moins un organe de commande à distance comportant un système de positionnement du casque.

Un tel asservissement permet ainsi au pilote de commander les mouvements de l'organe de visée juste en positionnant son casque dans une direction particulière.

Un tel système de positionnement du casque peut notamment comporter des senseurs de position du casque, voire de vitesse ou d'accélération du casque par rapport à l'aéronef.

Un tel agencement est avantageux puisqu'il permet au pilote de conserver les commandes de pilotage de l'aéronef à l'aide de ses mains et/ou de ses pieds et de piloter les mouvements de l'organe de visée à l'aide d'un œil, voire de sa tête.

La présente invention a aussi pour objet un système de visée d'un aéronef comportant un organe de visée et un dispositif de commande commandant un déplacement de l'organe de visée, l'organe de visée comportant au moins deux degrés de liberté en rotation par rapport à un châssis solidaire de l'aéronef, les au moins deux degrés de liberté comportant un premier degré de liberté en rotation selon un axe de rotation en site et un second degré de liberté en rotation selon un axe de rotation en gisement.

Ce système est remarquable en ce que le dispositif de commande comporte :
o au moins un organe de blocage configuré pour maintenir en position et alternativement libérer l'organe de visée par rapport au châssis,
o au moins un actionneur configuré pour modifier une position de l'organe de visée en fonction d'au moins un ordre de commande, et
o un contrôleur générant ledit au moins un ordre de commande transmis audit au moins un actionneur,
et en ce que le système de visée comporte :
- au moins un organe de commande à distance configuré pour être actionné par un pilote de l'aéronef, ledit au moins un organe de commande à distance comportant un système de suivi d'au moins un œil du pilote organe de commande, ledit au moins un organe de commande à distance générant au moins une consigne de commande, ladite au moins une consigne de commande étant transmise au contrôleur,
- au moins une interface de sélection permettant une sélection d'un mode de commande des mouvements de l'organe de visée parmi trois modes comprenant :
   o un premier mode dans lequel l'organe de visée est laissé libre en rotation autour des axes de rotation en site et en gisement pour être manœuvrable par un opérateur distinct du pilote,
   o un deuxième mode dans lequel l'organe de visée est maintenu fixe par rapport au châssis au moyen dudit au moins un organe de blocage, et
   o un troisième mode dans lequel l'organe de visée est piloté à distance par le pilote de l'aéronef au moyen dudit au moins un organe de commande à distance.

Autrement dit, un tel système de commande est avantageux car il permet soit à un opérateur de manœuvrer l'organe de visée, soit de le bloquer en position par rapport au châssis dans une position prédéterminée par exemple, soit enfin au pilote de manœuvrer cet organe de visée grâce à au moins un organe de commande à distance qui est distant du châssis sur lequel l'organe de visée est agencé.

Ainsi, en présence d'un opérateur, le pilote peut sélectionner le premier mode et laisser libre les degrés de liberté de l'organe de visée par rapport au châssis.

Cependant, en cas d'absence de l'opérateur ou d'incapacité de celui-ci à manœuvrer l'organe de visée, le pilote peut alors sélectionner au choix le deuxième ou le troisième mode pour utiliser et orienter l'organe de visée selon sa préférence.

Un tel système de suivi d'au moins un œil du pilote permet de déduire une direction dans laquelle le pilote regarde afin d'orienter l'organe de visée dans cette direction. Par exemple, un tel système de suivi d'au moins un œil peut comporter une caméra de suivi agencée sur le casque et orientée en direction d'un œil du pilote.

Les images captées par cette caméra de suivi sont alors traitées par un calculateur qui en déduit une position et une orientation du regard par rapport au casque porté par le pilote et éventuellement de manière complémentaire une position et une orientation du casque par rapport au cockpit.

En pratique, ledit au moins un organe de commande à distance peut comporter un bouton multidirectionnel agencé sur une poignée d'un levier de commande de vol de l'aéronef.

Un tel bouton est dit multidirectionnel car il peut pivoter selon au moins deux degrés de liberté en rotation par rapport à la poignée. Un tel bouton multidirectionnel peut alors être actionné par un doigt du pilote, tel un pouce ou un index pour permettre au pilote de modifier manuellement une direction de visée de l'organe de visée lorsque le troisième mode est mis en œuvre.

Avantageusement, ledit au moins un organe de commande à distance peut comporter un système de positionnement d'un casque porté par le pilote configuré pour mesurer une position du casque par rapport à l'aéronef.

Un tel système de positionnement peut dès lors participer à la commande des mouvements de l'organe de visée en identifiant la position ou l'orientation du casque porté par le pilote.

En pratique, ledit système de positionnement du casque peut comporter une caméra montée sur le casque et une pluralité de cibles solidaires des parois du cockpit. Les images captées par la caméra sont alors traitées par un calculateur qui en déduit une position et une orientation du casque par rapport au cockpit de l'aéronef.

Un tel système de positionnement du casque permet ainsi d'estimer la position et la direction du casque porté par le pilote et par conséquent d'orienter en fonction l'organe de visée dans une direction de visée correspondante.

Avantageusement, le système de visée peut comporter un dispositif de visualisation comportant une caméra de visée agencée sur l'organe de visée, la caméra de visée générant des images d'un environnement extérieur à l'aéronef en direction duquel l'organe de visée est orienté, les images étant transmises à un afficheur agencé dans un cockpit de l'aéronef ou dans un casque pour être visualisées par le pilote.

Autrement dit, un tel dispositif de visualisation permet au pilote de visualiser sur l'afficheur une zone de l'environnement extérieur couverte par l'organe de visée. Une telle zone peut en effet ne pas être visible depuis le cockpit. L'afficheur peut par exemple comporter un écran agencé sur une planche de bord ou sur un pupitre du cockpit.

Selon un autre aspect de l'invention, ledit au moins un organe de blocage peut comporter un doigt d'indexage et un alésage de forme complémentaire, le doigt d'indexage étant mobile en translation entre une position de blocage dans laquelle le doigt d'indexage coopère avec l'alésage et une position de libération dans laquelle le doigt d'indexage est agencé à l'extérieur de l'alésage.

Par suite, chaque degré de liberté en rotation de l'organe de visée peut être alternativement bloqué ou libérer à l'aide d'un doigt d'indexage. Le déplacement en translation de chaque doigt d'indexage peut avantageusement être motorisé par exemple au moyen d'un système à vis sans fin et d'un moteur électrique entraînant en rotation la vis de ce système.

Par ailleurs, le dispositif de commande peut comporter au moins deux butées configurées pour limiter angulairement en rotation l'un desdits au moins deux degrés de liberté en rotation de l'organe de visée par rapport au châssis.

De telles butées sont avantageusement configurées pour éviter une orientation de l'organe de visée en direction d'un organe de l'aéronef.

En pratique, lesdites au moins deux butées peuvent être choisies parmi le groupe comportant les butées mécaniques, les butées électriques et les butées logicielles.

Les butées mécaniques peuvent être définies en fonction de masques de sécurité à appliquer pour éviter une orientation de l'organe de visée vers l'aéronef. De tels masques de sécurité peuvent être obtenus au moyen d'une analyse en maquette numérique de l'aéronef. Le débattement de l'organe de visée est simulé et des zones sont volontairement bloquées dans le but de s'assurer qu'une ligne de visée ne rencontrera aucune partie physique de l'aéronef tels que des pales, un fuselage, des antennes, un bras d'emport, un carénage arrière ou une poutre de queue dans le cas d'un hélicoptère.

Usuellement, de telles butées mécaniques comportent des pièces métalliques qui sont placées aux extrémités de la course autorisée de l'organe de visée, à proximité des axes de rotation en site et en gisement.

Dans le cas du troisième mode, il est possible de configurer l'asservissement de l'organe de visée avec des barrières de sécurité supplémentaire telle qu'une butée logicielle, pouvant être configurable en fonction des différents équipements installés sur l'aéronef ou encore une butée électrique avec capteur angulaire de présence.

Dans ce cas, une telle butée électrique peut être redondante et utilisée en cas de panne d'un calculateur mettant en œuvre initialement la butée logicielle.

La butée mécanique pourra également être redondante et quant à elle être sollicitée uniquement en cas de panne des butées logicielle et/ou électrique.

L'invention concerne également un aéronef comportant un système de visée comportant au moins un organe de visée et un dispositif de commande des mouvements dudit au moins un organe de visée.

Un tel aéronef est remarquable en ce que le système de visée est tel que précédemment décrit.

Par exemple, un tel aéronef peut comporter deux organes de visée agencés latéralement respectivement au niveau d'un côté gauche et d'un côté droit par rapport à l'axe longitudinal de l'aéronef.

Dans ce cas, l'aéronef peut comporter également deux systèmes de visée comportant chacun au moins un dispositif de commande de l'organe de visée, au moins un organe de commande à distance et au moins une interface de sélection.

L'invention et ses avantages apparaîtront avec plus de détails dans le cadre de la description qui suit avec des exemples donnés à titre illustratif en référence aux figures annexées qui représentent :
la figure 1, un schéma illustrant un aéronef en vue de côté,
la figure 2, une vue en perspective d'un organe de visée équipant un aéronef,
la figure 3, une vue en perspective éclatée d'un organe de visée,
la figure 4, une autre vue en perspective éclatée d'un organe de visée,
la figure 5, une vue de dessus d'un aéronef muni de deux organes de visée,
la figure 6, une vue schématique d'une interface de sélection équipant un tel aéronef,
la figure 7, une vue schématique d'une interface de sélection équipant un tel aéronef, et
la figure 8, un logigramme illustrant un procédé de commande d'un organe de visée.

Les éléments présents dans plusieurs figures distinctes sont affectés d'une seule et même référence.

Comme déjà évoqué, l'invention concerne un système de commande 26 permettant de commander des mouvements d'un organe de visée 2 équipant un aéronef 1, tel que par exemple un giravion comportant au moins un rotor 18 permettant de participer à la sustentation de ce giravion 1.

Un tel organe de visée 2 permet de viser une cible et peut comporter un objet de forme allongée pouvant se présenter sous la forme d'un canon d'arme mais également d'une source de lumière pour éclairer une cible, d'une caméra pour filmer et/ou prendre en photo une cible, ou encore d'une lance à eau pour arroser une zone par exemple pour lutter contre un incendie.

L'organe de visée 2 peut être agencé dans une partie de l'aéronef 1, en arrière et en dehors d'un cockpit 38 et peut être actionné par un opérateur. L'organe de visée 2 est monté de manière mobile en rotation par rapport à un châssis 3 solidaire de l'aéronef 1 afin de pouvoir effectuer un premier mouvement de rotation par rapport à un axe de rotation en site A1 et un second mouvement de rotation par rapport à un axe de rotation en gisement A2.

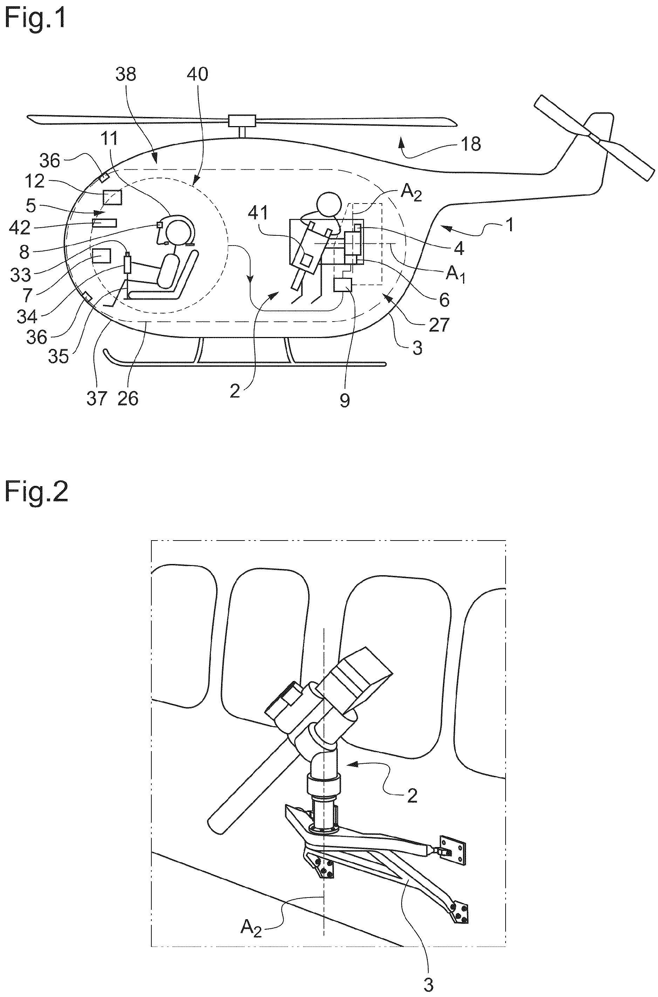

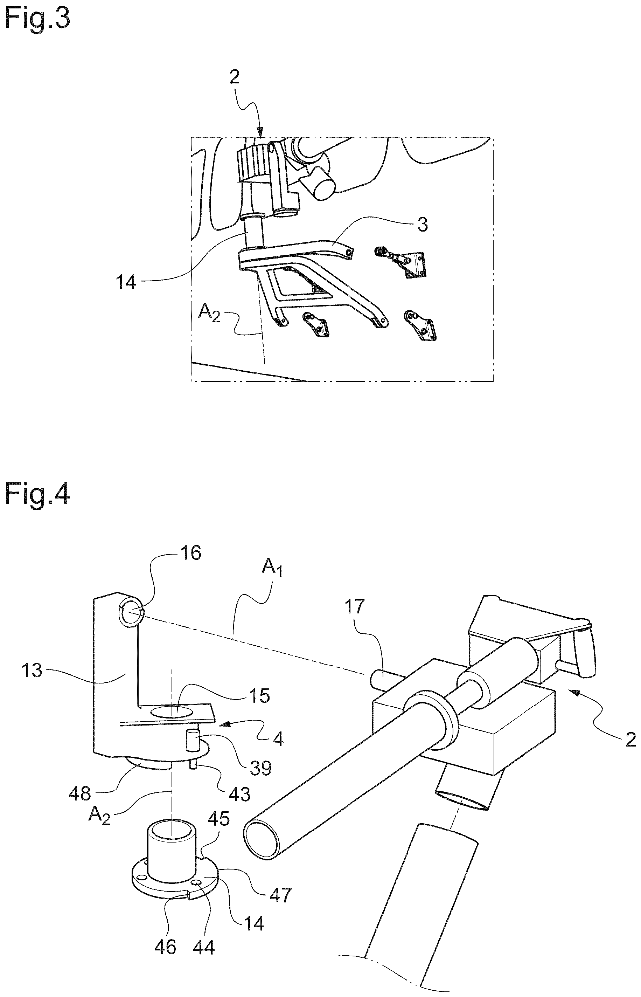

Autrement dit, l'organe de visée 2 est agencé selon une liaison rotule à doigt avec le châssis 3 et présente deux degrés de liberté en rotation suivant l'axe rotation en site A1 et l'axe en gisement A2 qui peuvent être orientés perpendiculairement l'un par rapport à l'autre. Un tel axe de rotation en site A1 peut ainsi être un axe sensiblement horizontal lorsque l'aéronef 1 repose sur un sol horizontal et l'axe de rotation en gisement A2 peut être sensiblement vertical tels que représentés aux figures 2 à 4.

En outre, le système 26 comporte un dispositif de commande 27. Le dispositif de commande 27 comporte quant à lui, d'une part, au moins un organe de blocage 4 configuré pour maintenir en position et alternativement libérer l'organe de visée 2 par rapport au châssis 3 et, d'autre part, au moins un actionneur 6 configuré pour modifier une position de l'organe de visée 2 en fonction d'au moins un ordre de commande généré par l'interface de sélection 7.

Le système 26 comporte également au moins un organe de commande à distance 5 configuré pour être actionné par un pilote de l'aéronef 1, ce ou ces organes de commande à distance 5 générant une consigne de commande transmise au contrôleur 9 de pilotage de position de l'organe de visée 2, 2'.

Un tel contrôleur 9 génère alors ledit au moins un ordre de commande en fonction de la consigne de commande reçue.

Un tel au moins un organe de commande à distance 5 peut notamment comporter un bouton multidirectionnel 33 agencé sur une poignée 34 d'un levier de commande de vol 35 de l'aéronef 1, tel que par exemple un levier de commande d'un pas cyclique commandant un pas variant cycliquement des pales d'un rotor 18 d'hélicoptère.

En outre, de manière complémentaire ou alternative, ledit au moins un organe de commande à distance 5 peut comporter un système de positionnement 12 d'un casque 11 porté par le pilote de l'aéronef 1 pour évaluer la position et l'orientation du casque 11.

Un tel système de positionnement 12 peut notamment comporter un ou plusieurs capteurs de position aptes à mesurer une position relative du casque 11 dans le cockpit 38. Un tel système de positionnement 12 du casque 11 peut ainsi comporter au moins un capteur, telle une caméra 8 montée sur le casque 11 et une pluralité de cibles 36 solidaires des parois 37 du cockpit 38.

Par capteur, on entend ici un capteur physique capable de mesurer directement le paramètre en question, mais aussi un système pouvant comprendre un ou plusieurs capteurs physiques ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

En outre, de tels systèmes permettant de positionner un casque dans un cockpit sont connus et il est possible de référer à la littérature pour obtenir des descriptions détaillées de ces systèmes.

Par ailleurs, le système de visée 26 peut comporter au moins une interface de sélection 7 permettant à un pilote d'effectuer une sélection d'un mode de commande des mouvements de l'organe de visée 2 parmi au moins trois modes comprenant :
o un premier mode MOD1 dans lequel l'organe de visée 2 est laissé libre en rotation autour des axes de rotation en site (A1) et en gisement (A2) pour être manœuvrable par un opérateur distinct du pilote,
o un deuxième mode MOD2 dans lequel l'organe de visée 2 est maintenu fixe par rapport au châssis 3 au moyen dudit au moins un organe de blocage 4,
o un troisième mode MOD3 dans lequel l'organe de visée 2 est piloté à distance par le pilote de l'aéronef 1 au moyen dudit au moins un organe de commande à distance 5.

Une telle interface de sélection 7 peut notamment comporter un interrupteur à bascule, un bouton rotatif ou un écran muni d'une dalle tactile permettant d'afficher au moins trois boutons virtuels permettant de sélectionner individuellement l'un des au moins trois modes MOD1, MOD2 ou MOD3.

Tel que représenté aux figures 2 à 4, un tel organe de visée 2 est donc mobile par rapport à un châssis 3 selon deux axes de rotation A1, A2.

Un tel châssis 3 peut ainsi émerger latéralement d'un fuselage de l'aéronef 1 et comporter des tiges ou des supports solidarisés par des points de fixation à une structure porteuse de l'aéronef 1. Le châssis 3 peut en outre également comporter un cylindre de révolution 14 orienté selon l'axe de rotation en gisement A2.

Le système 26 comporte un bras de liaison 13 présentant un premier alésage 16 coopérant avec un pion 17 de l'organe de visée 2 selon l'axe de rotation en site A1 et un second alésage 15 orientée quant à lui selon l'axe de rotation en gisement A2 et coopérant avec le cylindre de révolution 14 du châssis 3. Un tel bras de liaison 13 permet ainsi de fournir les deux degrés de liberté en rotation en site et en gisement de l'organe de visée 2 par rapport au châssis 3.

Par ailleurs, le dispositif de commande 27 peut comporter au moins deux butées 45, 46 configurées pour limiter angulairement en rotation l'un des degrés de liberté en rotation de l'organe de visée 2 par rapport au châssis 3.

De telles butées 45, 46 sont avantageusement configurées pour éviter une orientation de l'organe de visée 2 en direction d'un organe de l'aéronef 1.

Dans l'exemple représenté, lesdites au moins deux butées 45, 46 sont des butées mécaniques formant des excroissances radiales émergeant d'une base plane 47 du cylindre de révolution 14 pour limiter le degré de mobilité en rotation de l'organe de visée 2 par rapport au châssis 3 selon l'axe de rotation en gisement A2.

Ces butées 45, 46 peuvent alors coopérer avec un rebord 48 du bras de liaison 13.

De même, de telles butées peuvent également être agencées au niveau du degré de mobilité en rotation de l'organe de visée 2 par rapport au châssis 3 selon l'axe de rotation en site A1. Dans ce cas, les butées peuvent être agencées au niveau du premier alésage 16 et du pion 17 de l'organe de visée 2.

Alternativement, de telles au moins deux butées 45, 46 peuvent être des butées électriques et/ou butées logicielles.

Les butées mécaniques peuvent être définies en fonction de masques de sécurité à appliquer pour éviter que l'organe de visée 2 puisse s'orienter vers l'aéronef 1.

Selon un autre aspect, ledit au moins un organe de blocage 4 peut comporter un doigt d'indexage 43 et un alésage 44 de forme complémentaire. Le doigt d'indexage 43 peut être déplacé manuellement par un pilote et/ou un opérateur ou alternativement le doigt d'indexage 43 peut être déplacé automatiquement par un moyen motorisé, par exemple un moteur électrique 39. Chaque moyen motorisé 39 permet alors de commander un déplacement en translation d'un doigt d'indexage 43 le long de son axe de révolution entre deux positions par rapport à un support.

Chaque doigt d'indexage 43 est mobile en translation entre une position de blocage dans laquelle le doigt d'indexage 43 coopère au moins partiellement avec l'alésage 44 et une position de libération dans laquelle le doigt d'indexage 43 est agencé à l'extérieur de l'alésage 44.

Le doigt d'indexage 43 et le moyen motorisé sont ici représentés comme étant solidaires du bras de liaison 13 et l'alésage 44 est ménagé dans la base plane 47 du cylindre de révolution 14. Inversement, le doigt d'indexage 43 et le moyen motorisé peuvent être solidaires de la base plane 47 du cylindre de révolution 14 et l'alésage 44 peut être ménagé dans le bras de liaison 13.

En outre, la base plane 47 ou le bras de liaison 13 peuvent comporter plusieurs alésages 44 pour permettre de maintenir en position l'organe de visée 2 par rapport à au châssis 3 selon différentes orientations prédéterminées.

De même, un doigt d'indexage et au moins un alésage complémentaire peuvent également être agencées au niveau du degré de mobilité en rotation de l'organe de visée 2 par rapport au châssis 3 selon l'axe de rotation en site A1.

Dans ce cas, le doigt d'indexage et le ou les alésages complémentaires peuvent être agencées au niveau du premier alésage 16 et du pion 17 de l'organe de visée 2.

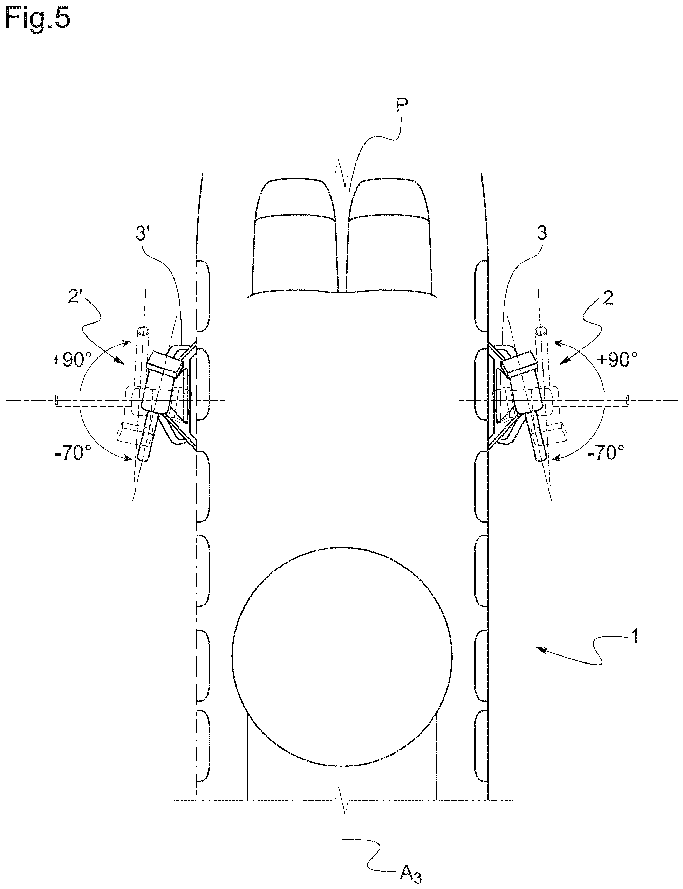

Tel que représenté à la figure 5, l'aéronef 1 peut comporter plusieurs organes de visée 2, 2' et notamment deux organes de visée agencés latéralement de part et d'autre d'un plan médian P de l'aéronef 1 orienté verticalement et s'étendant entre un nez et une queue de l'aéronef 1.

Chaque organe de visée 2, 2' est alors mobile en rotation respectivement par rapport à un châssis 3, 3' solidaire de l'aéronef 1.

Il est alors possible de définir une valeur de référence, par exemple nulle, de l'angle de rotation de chaque organe de visée 2, 2' autour de l'axe de rotation en gisement A2 comme étant perpendiculaire à un axe longitudinal A3 passant par le plan P.

Chaque organe de visée 2, 2' peut alors par exemple se déplacer en rotation par rapport à cette valeur de référence autour de l'axe de rotation en gisement A2 dans une plage de +90° vers l'avant et de - 70° vers l'arrière.

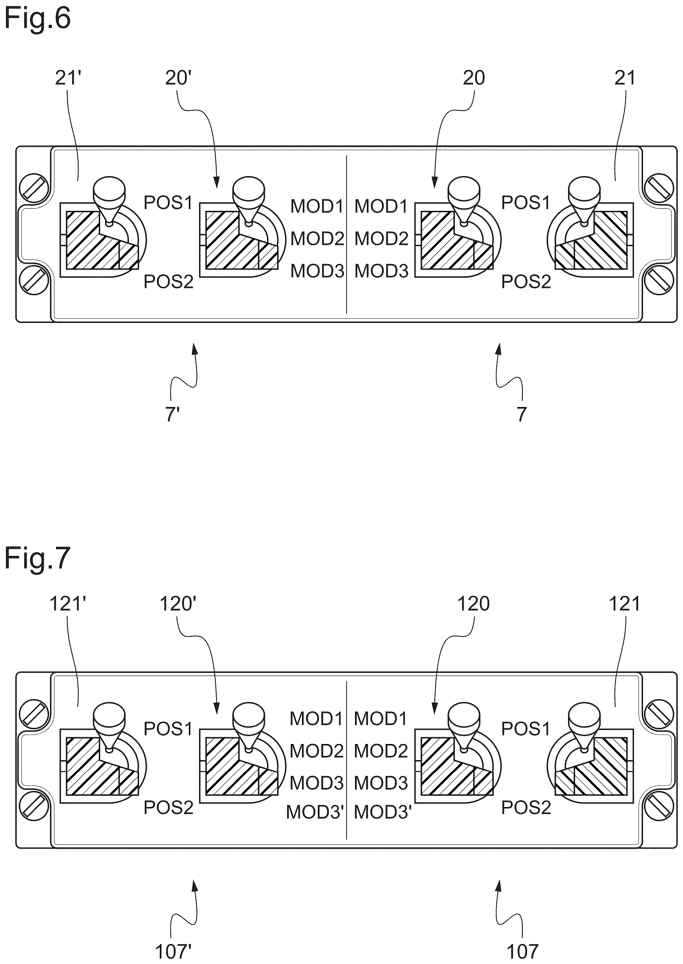

Par suite, tel que représenté à la figure 6, le système 26 peut comporter plusieurs interfaces de sélection 7, 7' comportant chacune un interrupteur à bascule de sélection 20, 20' à trois positions pour pourvoir sélectionner individuellement pour chaque organe de visée 2, 2' un mode parmi les trois modes MOD1, MOD2, MOD3.

Par suite, le pilote peut sélectionner par exemple le premier mode MOD1 sur un premier organe de visée 2 et le troisième mode MOD3 sur un second organe de visée 2'. Si jamais, en cours de mission, l'opérateur n'est plus en mesure de contrôler les mouvements du premier organe de visée 2, le pilote peut alors dans ce cas sélectionner le deuxième mode MOD2 au moyen de l'interface de sélection 7 et de son interrupteur à bascule de sélection 20.

Par ailleurs, lorsque l'aéronef 1 embarque à son bord à la fois un pilote et un copilote, le pilote peut sélectionner par exemple le troisième mode MOD3 sur un premier organe de visée 2 et le copilote peut sélectionner également le troisième mode MOD3 sur un second organe de visée 2'.

En outre, chaque interface de sélection 7, 7' peut comporter un interrupteur à bascule d'armement 21, 21' à deux positions permettant par exemple d'armer chaque organe de visée 2, 2' pour permettre au pilote de déclencher ensuite une action complémentaire à l'aide de chaque organe de visée 2, 2'. Une telle action complémentaire est alors mise en œuvre au moyen d'un organe de commande supplémentaire non représenté et permettant par exemple de tirer un projectile avec un canon de l'organe de visée, d'éclairer une cible avec une source de lumière, de prendre une photo avec une caméra ou encore d'arroser une zone avec une lance à eau.

Chaque interrupteur à bascule d'armement 21, 21' est ainsi mobile entre une première position POS1 correspondant à un état inactif empêchant le déclenchement de l'action complémentaire par l'organe de commande supplémentaire et une seconde position POS2 correspondant à un état actif permettant le déclenchement de l'action complémentaire par l'organe de commande supplémentaire.

Tel que représenté à la figure 7, le système 26 peut comporter plusieurs interfaces de sélection 107, 107' comportant chacune un interrupteur à bascule de sélection 120, 120' à quatre positions pour pourvoir sélectionner individuellement pour chaque organe de visée 2, 2' un mode parmi les quatre modes MOD1, MOD2, MOD3 ou MOD3'.

Les troisième modes MOD3 et MOD3' correspondent à des modes dans lesquels les deux organes de visée 2, 2' peuvent être pilotés à distance alternativement par un pilote et un copilote de l'aéronef 1 respectivement au moyen d'au moins deux organes de commande à distance 5.

Par suite, le pilote peut sélectionner par exemple le troisième mode MOD3 sur un premier interrupteur à bascule de sélection 120 pour commander à distance le premier organe de visée 2 et le copilote peut sélectionner le troisième mode MOD3' sur un second interrupteur à bascule de sélection 120' pour commander à distance le second organe de visée 2'.

En revanche, si le copilote est absent ou dans l'incapacité de commander à distance le second organe de visée 2', le pilote peut alors dans ce cas sélectionner le troisième mode MOD3' au moyen de l'interface de sélection 107 et de son interrupteur à bascule de sélection 120.

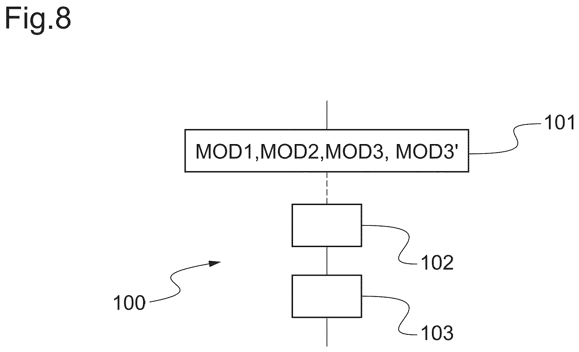

Tel que représenté à la figure 8, l'invention concerne également un procédé 100 de commande des mouvements de l'organe de visée 2, 2' équipant l'aéronef 1.

Un tel procédé 100 comporte ainsi au moins une sélection 101 du mode de commande des mouvements de l'organe de visée 2, 2' parmi trois modes comprenant le premier mode MOD1, le deuxième mode MOD2 et le troisième mode MOD3 décrits précédemment.

En outre, la ou les sélections 101 sont opérées par le ou les pilotes de l'aéronef 1 à l'aide d'une ou de plusieurs interfaces de sélection 7, 7'.

Le procédé 100 comporte alors une transmission 102 d'un signal de sélection, porteur du mode de commande sélectionné, depuis une interface de sélection 7, 7' vers le contrôleur 9 de pilotage de position de chaque organe de visée 2, 2'.

Par ailleurs, lorsque le troisième mode MOD3 est sélectionné, le procédé 100 peut comporter un asservissement 103 de la position de l'organe de visée 2, 2' en fonction d'une position du casque 11, ledit au moins un organe de commande à distance 5 comportant un système de positionnement 12 du casque 11.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé (100) de commande des mouvements d'un organe de visée (2, 2') d'un aéronef (1), ledit organe de visée (2, 2') comportant au moins deux degrés de liberté en rotation par rapport à un châssis (3, 3') solidaire dudit aéronef (1), lesdits au moins deux degrés de liberté comportant un premier degré de liberté en rotation selon un axe de rotation en site (A1) et un second degré de liberté en rotation selon un axe de rotation en gisement (A2),
**caractérisé en ce que** ledit procédé (100) comporte au moins une sélection (101) d'un mode de commande desdits premier et second degrés de liberté dudit organe de visée (2, 2') parmi au moins trois modes comprenant :
- un premier mode (MOD1) dans lequel ledit organe de visée (2, 2') est laissé libre en rotation autour desdits axes de rotation en site (A1) et en gisement (A2) pour être manœuvrable par un opérateur,
- un deuxième mode (MOD2) dans lequel ledit organe de visée (2, 2') est maintenu fixe par rapport audit châssis (3, 3'), ledit aéronef (1) comportant au moins un organe de blocage (4) configuré pour maintenir dans une position prédéterminée ledit organe de visée (2, 2') par rapport audit châssis (3, 3'),
- un troisième mode (MOD3, MOD3') dans lequel ledit organe de visée (2, 2') est piloté à distance par un pilote de l'aéronef (1) distinct dudit opérateur au moyen d'au moins un organe de commande à distance (5) actionné par ledit pilote de l'aéronef (1), ledit au moins un organe de commande à distance (5) comportant un système de suivi (10) d'au moins un œil dudit pilote, et d'au moins un actionneur (6) configuré pour modifier une position dudit organe de visée (2, 2') par rapport audit châssis (3, 3'), ledit au moins un organe de commande à distance (5) générant au moins une consigne de commande, ladite au moins une consigne de commande étant transmise à un contrôleur (9), ledit contrôleur (9) générant un ordre de commande transmis audit au moins un actionneur (6).

2. Procédé selon la revendication 1,
**caractérisé en ce que** ladite au moins une sélection (101) étant opérée par ledit pilote de l'aéronef (1) à l'aide d'une interface de sélection (7, 7', 107, 107'), ledit procédé (100) comporte une transmission (102) d'un signal de sélection, porteur dudit mode de commande sélectionné, de ladite interface de sélection (7, 7', 107, 107') vers ledit contrôleur (9).

3. Procédé selon l'une quelconque des revendications 1 à 2,
**caractérisé en ce que**, lorsque ledit troisième mode (MOD3) est sélectionné, ledit procédé (100) comporte un asservissement (103) de ladite position dudit organe de visée (2, 2') en fonction d'une position dudit casque (11), ledit au moins un organe de commande à distance (5) comportant un système de positionnement (12) dudit casque (11).

4. Système de visée (26) d'un aéronef (1), ledit système de visée (26) comportant un organe de visée (2, 2') et un dispositif de commande (27) commandant un déplacement dudit organe de visée (2, 2'), ledit organe de visée (2, 2') comportant au moins deux degrés de liberté en rotation par rapport à un châssis (3, 3') solidaire dudit aéronef (1), lesdits au moins deux degrés de liberté comportant un premier degré de liberté en rotation selon un axe (A1) de rotation en site et un second degré de liberté en rotation selon un axe (A2) de rotation en gisement,
**caractérisé en ce que** ledit dispositif de commande (27) comporte :
o au moins un organe de blocage (4) configuré pour maintenir en position et alternativement libérer ledit organe de visée (2, 2') par rapport audit châssis (3, 3'),
o au moins un actionneur (6) configuré pour modifier une position dudit organe de visée (2, 2') en fonction d'au moins un ordre de commande, et
o un contrôleur (9) de pilotage de position dudit organe de visée (2, 2'), ledit contrôleur (9) générant ledit au moins un ordre de commande transmis audit au moins un actionneur (6),
et **en ce que** ledit système de visée (26) comporte :
- au moins un organe de commande à distance (5) configuré pour être actionné par un pilote de l'aéronef (1), ledit au moins un organe de commande à distance (5) comportant un système de suivi (10) d'au moins un œil dudit pilote, ledit au moins un organe de commande à distance (5) générant au moins une consigne de commande, ladite au moins une consigne de commande étant transmise audit contrôleur (9) de pilotage de position dudit organe de visée (2, 2'),
- au moins une interface de sélection (7, 7', 107, 107') permettant une sélection (101) d'un mode de commande des mouvements dudit organe de visée (2, 2') parmi au moins trois modes comprenant :
o un premier mode (MOD1) dans lequel ledit organe de visée (2, 2') est laissé libre en rotation autour desdits axes de rotation en site (A1) et en gisement (A2) pour être manœuvrable par un opérateur distinct dudit pilote,
o un deuxième mode (MOD2) dans lequel ledit organe de visée (2, 2') est maintenu fixe par rapport audit châssis (3, 3') au moyen dudit au moins un organe de blocage (4), et
o un troisième mode (MOD3) dans lequel ledit organe de visée (2, 2') est piloté à distance par ledit pilote de l'aéronef (1) au moyen dudit au moins un organe de commande à distance (5).

5. Système selon la revendication 4,
**caractérisé en ce que** ledit au moins un organe de commande à distance (5) comporte un bouton multidirectionnel (33) agencé sur une poignée (34) d'un levier de commande de vol (35) dudit aéronef (1).

6. Système selon l'une quelconque des revendications 4 à 5,
**caractérisé en ce que** ledit au moins un organe de commande à distance (5) comporte un système de positionnement (12) d'un casque (11) porté par ledit pilote configuré pour mesurer une position dudit casque (11) par rapport audit aéronef (1).

7. Système selon la revendication 6,
**caractérisé en ce que** ledit système de positionnement (12) dudit casque (11) comporte une caméra (8) montée sur ledit casque (11) et une pluralité de cibles (36) solidaires des parois (37) d'un cockpit (38) dudit aéronef (1).

8. Système selon l'une quelconque des revendications 4 à 7,
**caractérisé en ce que** ledit système de visée (26) comporte un dispositif de visualisation (40) comportant une caméra de visée (41) agencée sur ledit organe de visée (2, 2'), ladite caméra de visée (41) générant des images d'un environnement extérieur audit aéronef (1) en direction duquel ledit organe de visée (2, 2') est orienté, lesdites images étant transmises à un afficheur (42) agencé dans un cockpit (38) dudit aéronef (1) pour être visualisées par ledit pilote.

9. Système selon l'une quelconque des revendications 4 à 8,
**caractérisé en ce que** ledit au moins un organe de blocage (4) comporte un doigt d'indexage (43) et un alésage (44) de forme complémentaire, ledit doigt d'indexage (43) étant mobile en translation entre une position de blocage dans laquelle ledit doigt d'indexage (43) coopère avec ledit alésage (44) et une position de libération dans laquelle ledit doigt d'indexage (43) est agencé à l'extérieur dudit alésage (44).

10. Système selon l'une quelconque des revendications 4 à 9,
**caractérisé en ce que** ledit dispositif de commande (27) comporte au moins deux butées (45, 46) configurées pour limiter angulairement en rotation l'un desdits au moins deux degrés de liberté en rotation dudit organe de visée (2, 2') par rapport audit châssis (3, 3').

11. Système selon la revendication 10,
**caractérisé en ce que** lesdites au moins deux butées (45, 46) sont choisies parmi le groupe comportant les butées mécaniques, les butées électriques et les butées logicielles.

12. Aéronef (1) comportant un système de visée (26) comportant au moins un organe de visée (2, 2') et un dispositif de commande (27) des mouvements dudit au moins un organe de visée (2, 2'),
**caractérisé en ce que** ledit système de visée (26) est selon l'une quelconque des revendications 4 à 11.
